# EUROPEAN PATENT SPECIFICATION

(11) **EP 3 622 425 B1**
(45) Date of publication and mention of the grant of the patent: **08.06.2022**
(21) Application number: 18720228.8
(22) Date of filing: 25.04.2018
(51) Int. Cl.: G06F 21/10, G06K 19/10, G06K 19/08, G06K 19/06, G06Q 30/00

(54) **A METHOD AND A SYSTEM FOR CREATING AND AUTHENTICATING A BINARY GRAPHIC CODE**
VERFAHREN UND SYSTEM ZUR ERZEUGUNG UND AUTHENTIFIZIERUNG EINES BINÄREN GRAFISCHEN CODES
PROCÉDÉ ET SYSTÈME DE CRÉATION ET D'AUTHENTIFICATION D'UN CODE GRAPHIQUE BINAIRE

(30) Priority: 09.05.2017 CN 201710321412
(43) Date of publication of application: 18.03.2020
(73) Proprietor: Robert Bosch GmbH, 70442 Stuttgart (DE); Fudan University, Shanghai 200433 (CN)
(72) Inventor: XIE, Hui, Shanghai 200335 (CN); ROSE, Hannes, Shanghai 200335 (CN); ZOU, Zhuo, Shanghai 200335 (CN); YEH, Shih-Ching, Shanghai 200433 (CN); SHANG, Huiliang, Shanghai 200433 (CN); HAN, Xu, Shanghai 200335 (CN); ZHENG, Lirong, Shanghai 200433 (CN)
(86) International application number: PCT/EP2018/060551
(87) International publication number: WO 2018/206289

(56) References cited:
- EP-A1- 1 953 684
- GB-A- 2 407 424

## Description

### Technical Field

The invention relates to a digital anti-counterfeiting technology, in particular to a method and a system for creating and authenticating a binary graphic code.

### Background Art

Counterfeit products are a global problem. The prior art mainly adopts physical or digital technologies to prevent products from being forged. Physical anti-counterfeiting technologies, such as holograms and watermarks, may require additional equipment support and manual identification for verification, which is inconvenient for users to operate. Digital anti-counterfeiting technologies, such as two-dimensional codes and bar codes, can be verified only by smartphones and other terminals, facilitating related links in a supply chain and operations by end users; their disadvantage is that the digital security label itself can be easily copied and counterfeited.

Examples of physical anti-counterfeiting technologies are described in GB 2 407 424 A and EP 1 953 684 A1, for instance.

### Summary of the Invention

In order to solve the problems existing in the prior art, the present application provides a method for creating an authenticable binary graphic code with the features of claim 1, a product carrying an authenticable binary graphic code with the features of claim 2, a method for authenticating a binary graphic code with the features of claim 4, a binary graphic code creation system for creating an authenticable binary graphic code with the features of claim 8 and a binary graphic code authentication system with the features of claim 9.

In a feasible implementation, a position at which the binary graphic encoded pattern is printed on a surface of the product body is random or pseudorandomIn a feasible implementation, the step of providing an authentication result further comprises: if the authentication is deemed to have been passed, allowing the binary graphic encoded pattern to be decoded and acquiring confidential information.

In a feasible implementation, the information to be encoded is confidential information or a confidential information index.

In a feasible implementation, when the information to be encoded is a confidential information index, the step of allowing the binary graphic encoded pattern to be decoded and obtaining confidential information further comprises: generating a query password immediately, the query password having a validity period;
sending the query password to the requester of binary graphic code creation and confirming its receipt;
sending the query password and decoding key to the requester of binary graphic code authentication;
the requester of binary graphic code authentication performing decoding using the decoding key, obtaining the confidential information index, and sending the confidential information index and the received query password to the requester of binary graphic code creation;
the requester of binary graphic code creation checking whether the query password sent by the requester of binary graphic code authentication is the same as the query password received by itself and is within the validity period;
if yes, providing the requester of binary graphic code authentication with confidential information according to the confidential information index.

In a feasible implementation, the authentication service providing end further comprises:
a password generating unit for generating a query password immediately when the authentication result is a pass and the information to be encoded is a confidential information index, the query password having a validity period;
a password sending unit for sending the query password to the requester of binary graphic code creation and confirming its receipt, and sending the query password and decoding key to the requester of binary graphic code authentication.

In a feasible implementation, the system further comprises a confidential information providing end for coordinating with the authentication service providing end, the confidential information providing end comprising:
a password receiving unit for receiving a query password sent from the authentication service providing end and confirming its receipt, and receiving the product information index and query password sent by the requester of the binary graphic code authentication;
a password verification unit for checking whether the query password from the requester of the binary graphic code authentication is the same as the query password from the authentication service providing end and is within the validity period; and
a product information providing unit for, if the password verification is passed, providing confidential information to the requester of the binary graphic code authentication according to the confidential information index.

For a better understanding of the features and technical contents of the present application, refer to the following detailed description of the present application and the accompanying drawings. However, the drawings are provided for reference and description only, and are not intended to limit the present application.

### Brief Description of the Drawings

The foregoing and other aspects of the present application will be more fully understood with reference to the following detailed description taken in conjunction with the accompanying drawings, in which:
Figure 1 is a schematic flowchart of an embodiment of a method for creating an authenticable binary graphic code in the present application;
Figure 2a is a schematic diagram illustrating a binary graphic encoded pattern printed on a label or product surface having a printed pattern according to an embodiment of the present application;
Figure 2b is a schematic diagram illustrating a binary graphic encoded pattern printed on a label or product surface with a self-texture in another embodiment of the present application;
Figure 3 is a schematic diagram illustrating a system for creating a binary graphic code according to an embodiment of the present application;
Figure 4 is a schematic flowchart illustrating a method for authenticating a binary graphic code according to an embodiment of the present application;
Figure 5 is a schematic flowchart illustrating the decoding of the binary graphic encoded pattern in an embodiment of the present application;
Figure 6 is a schematic diagram illustrating a binary graphic encoding authentication system according to an embodiment of the present application;
Figure 7a is a schematic diagram illustrating data exchange between the two parties in the embodiment shown in Figure 1;
Figure 7b is a schematic diagram illustrating data exchange between the two parties in the embodiment shown in Figure 4;
Figure 7c is a schematic diagram illustrating data exchange among the three parties in the embodiment shown in Figure 5.

### Specific Embodiments

In order to help those of ordinary skill in the art to understand the subject matter claimed in the present application, specific embodiments of the present application will be described in detail below with reference to the accompanying drawings.

Y involved herein indicates the product provider, that is, the requester of binary graphic code creation; Z indicates the authentication service requester, that is, the requester of binary graphic code authentication; and X indicates the authentication service provider.

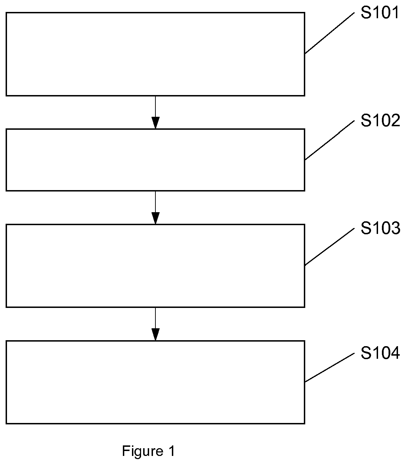

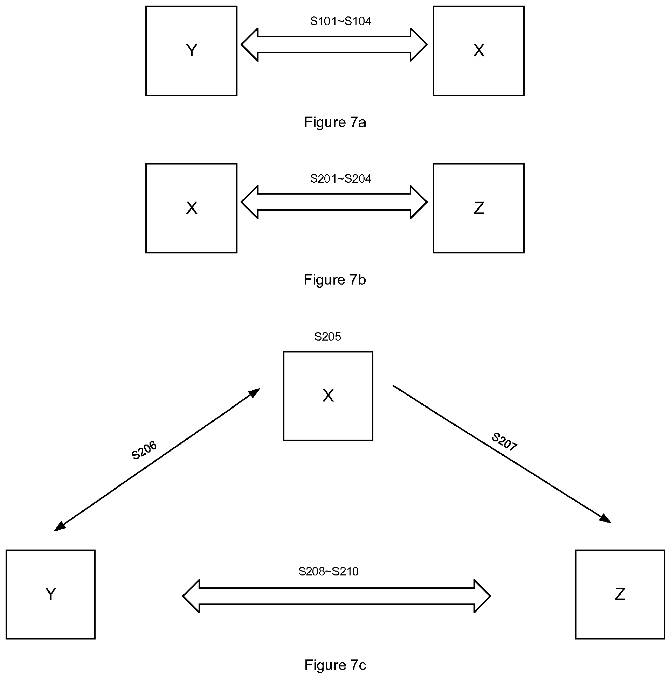

With reference to Figure 1 and Figure 7a, a method for creating an authenticable binary graphic code involves an authentication service provider X and a requester of binary graphic code creation Y, the method at least comprising the following steps:
in step S101, the authentication service provider X, in response to a request of the requester of binary graphic code creation Y, creates a unique binary graphic code pattern for the information to be encoded;
in step S102, the binary graphic encoded pattern is printed on a label or product surface;
in step S103, characteristic information is extracted about an area in which the binary graphic encoded pattern and the label or product surface overlap; and in step S104, the authentication service provider X records the characteristic information as all or part of the standard for authenticating the binary graphic code.

Among other items, the characteristic information may include a printed pattern or a self-texture of the label or product surface. Alternatively, the characteristic information includes a relative positional relationship between a printed pattern or a self-texture of the label or product surface and the encoded pattern. A method for determining the relative positional relationship may be, for example, when the binary graphic encoded pattern is used as a coordinate, a printed pattern or self-texture of the label or product surface is in a coordinate on the binary graphic encoded pattern.

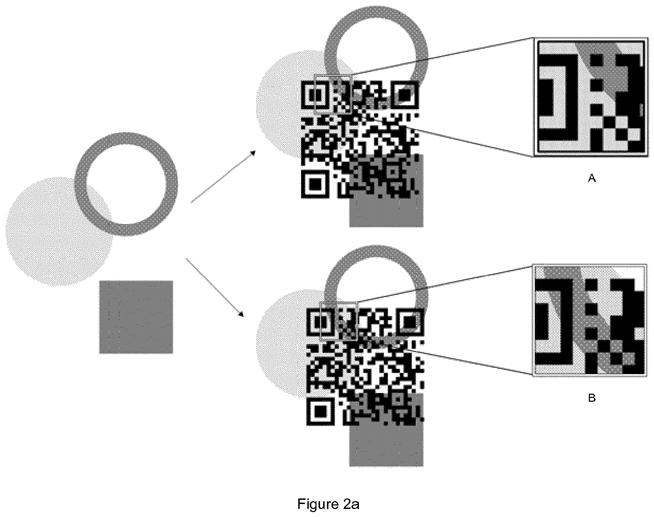

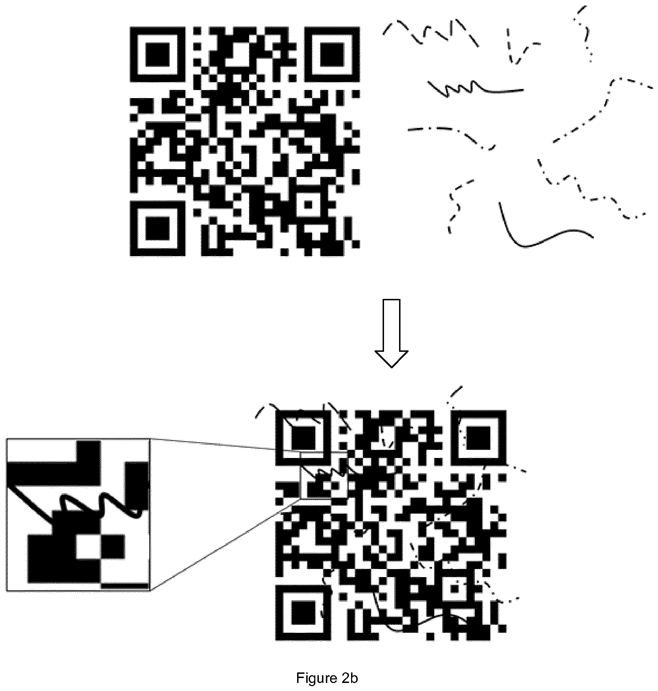

As shown in Figure 2, since the binary graphic encoded pattern is usually a rectangular area, when the pattern is used as a coordinate or as a reference for positioning, the relative position between the printed pattern or the self-texture of the label or the product surface and a binary graphic encoded pattern is relatively easy to determine. Especially when the printed pattern or the self-texture of the label or product surface is complicated, compared with extracting and comparing the printed pattern or self-texture, it is easier to extract and compare the relative positional relationship between the printed pattern or self-texture of the product surface and the encoded pattern; the amount of computation and data information storage required is smaller; and the extraction and comparison speed and accuracy are higher.

In addition, the present application effectively saves the space on the surface where the binary graphic encoded pattern is located, compared with the technical solution of adding special graphics or code for anti-counterfeiting in a peripheral area of a binary graphic encoded pattern. Compared with the technical solution of retaining a specific position in the middle area of a binary graphic encoded pattern to add special graphics or code for anti-counterfeiting, in the solution of adding special graphics or code to a middle area, the process of encoding and decoding the binary graphic encoded pattern requires additional design and prevention, whereas the present application does not require such additional labour.

It can be understood that, when an authenticable binary graphic code is created and loaded on a product surface in the foregoing manner, the product comprises a binary graphic encoded pattern printed on the product surface and a product body. An overlap area exists in at least a part of a surface of the product body or self-texture with the encoded pattern, and the characteristic information about the overlap area can be extracted and recorded as all or part of a standard for authenticating the product carrying the authenticable binary graphic code. In order to improve the anti-counterfeiting performance, in some embodiments, the position where the binary graphic encoded pattern is printed on a surface of the product body is random or pseudo-random. As shown in A and B in Figure 2a, for each product, the relative positional relationship between the printed pattern of the surface and the encoded pattern is also random or pseudo-random. Even if the printed pattern of the product surface and the binary graphic encoded pattern are known, the characteristic information such as the relative positional relationship between the two cannot easily be perceived or copied by a counterfeiter. Since characteristic information was extracted and recorded when the binary graphic code was created and loaded on the product surface, such characteristic information can be used to trace or authenticate products on the market after these products are put on the market. Similarly, as shown in Figure 2b, when the binary graphic encoded pattern is printed on a label or product surface with a self-texture, the relative positional relationship between these self-textures and binary graphic codes is also unique and cannot easily be counterfeited; it can be used as all or part of a standard for authentication.

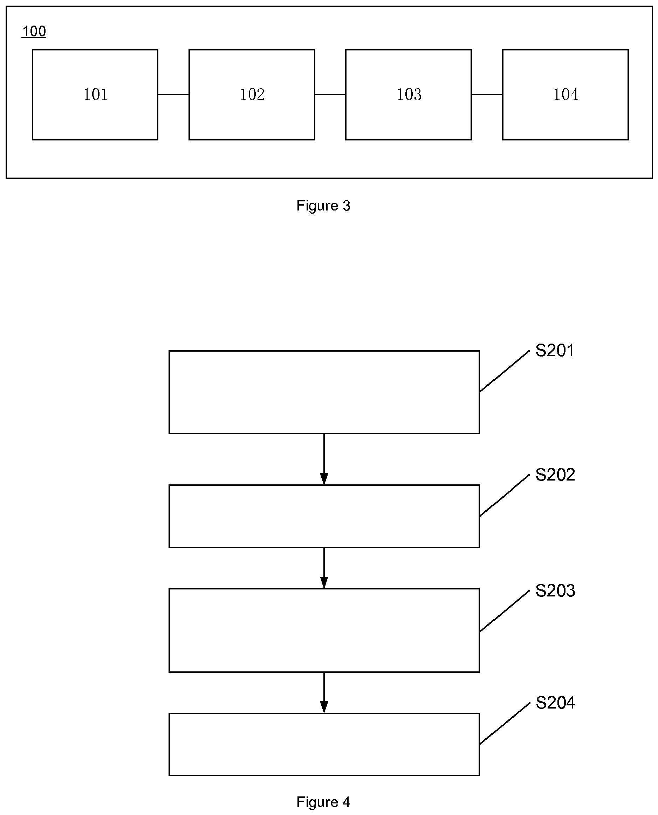

As shown in Figure 3, the present application also discloses a binary graphic code creation system 100. The binary graphic code creation system 100 is used for creating an authenticable binary graphic code, comprising:
an encoding unit 101 for, in response to a request for creation of a binary graphic code, creating a binary graphic encoded pattern for the information to be encoded; considering the "one code for one article" requirement in today's anti-counterfeiting standards, the binary graphic encoded pattern can be unique;
a printing unit 102 for printing the binary graphic encoded pattern on a label or product surface;
an extracting unit 103 for extracting characteristic information about an area in which the binary graphic encoded pattern and the label or product surface overlap; and
a recording unit 104 for recording the characteristic information as all or part of a standard for authenticating the binary graphic code.

With reference to Figure 4 and Figure 7b, a method for authenticating a binary graphic code disclosed in the present application relates to an authentication service requester Z and an authentication service provider X, comprising at least the following steps:
in step S201, in response to the authentication service requester Z's request for binary graphic code authentication, the authentication service provider X reads the binary graphic code to be authenticated;
in step S202, the authentication service provider X identifies the encoded pattern of and characteristic information about the binary graphic code to be authenticated;
in step S203, the authentication service provider X compares the characteristic information about the binary graphic code to be authenticated with recorded characteristic information; and
in step S204, the authentication service provider X provides the authentication service requester Z with an authentication result.

Among other items, for the comparison in step S203, a plurality of methods may be adopted. In this specific implementation, the method for comparing the characteristic information about the binary graphic code to be authenticated with recorded characteristic information comprises: judging whether the degree of matching between the two reaches a set threshold; if it reaches the set threshold, it is regarded as passing the authentication; otherwise, the authentication is deemed to have not been passed. For example, assuming that the set threshold is 80%, the authentication is deemed to have been passed if the degree of matching between the two reaches 80%. At this point, the result of the authentication may be provided to the requester.

In some implementations, after the step of providing the authentication result, the method further comprises: if the authentication service provider X believes that the binary graphic code provided by the authentication service requester Z is authenticated, allowing the binary graphic encoded pattern to be decoded.

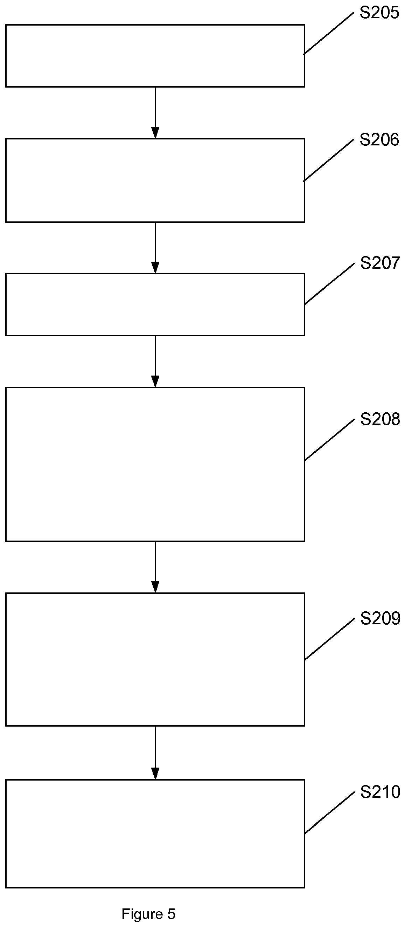

In some cases, the requester Y who creates a binary graphic code, considering a variety of reasons, does not provide confidential information as the information to be encoded for the authentication service provider X to create a binary graphic encoded pattern, but only provides a confidential information index for the authentication service provider X to create a binary graphic code pattern, while keeping the confidential information itself. As shown in Figure 5 and Figure 7c, in this case, the binary graphic encoded pattern needs to be decoded to obtain the initial confidential information. The step of allowing the decoding of the binary graphic encoded pattern may further comprise:
in step S205, the authentication service provider X immediately generates a query password having a validity period;
in step S206, the authentication service provider X sends the query password to the requester of binary graphic code creation Y and confirms its receipt;
in step S207, the authentication service provider X sends the query password and decoding key to the requester of binary graphic code authentication (that is, the authentication service requester Z);
in step S208, the authentication service requester Z performs decoding using the decoding key, obtains the confidential information index, and sends the confidential information index and the received query password to the requester of binary graphic code creation Y;
in step S209, the requester of binary graphic code creation Y checks whether the query password sent by the authentication service requester Z is the same as the query password received by itself and is within the validity period;
in step S210, if the conditions in step S209 are all satisfied, the requester of binary graphic code creation Y provides the authentication service requester Z with confidential information according to the confidential information index. As can be seen from the above-mentioned steps, in such an implementation, confidential information is stored only by the product provider, i.e., the requester of binary graphic code creation Y, while the authentication service provider does not need to store such information. This solution reduces the amount of information stored by the authentication service provider on the one hand, and ensures absolute security of the confidential information on the other hand. No party other than the product provider has a chance of obtaining and disclosing this information in batches.

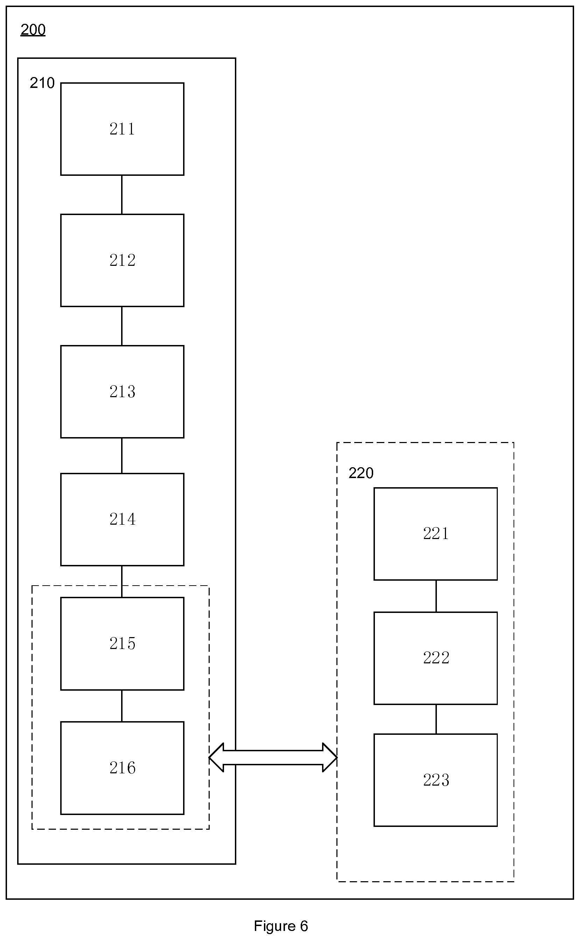

As shown in Figure 6, the present application also discloses a binary graphic code authentication system 200, which comprises an authentication service providing end 210; the authentication service providing end 210 is for identifying a to-be-authenticated binary graphic code created by the binary graphic code creation system 100. The authentication service providing end is usually set on the side of the authentication service provider X. The authentication service providing end 210 comprises:
a reading unit 211 for, in response to a request for authentication of a binary graphic code, reading the binary graphic code to be authenticated;
an identification unit 212 for identifying the encoded pattern of and characteristic information about the binary graphic code to be authenticated;
a comparison unit 213 for comparing characteristic information about the binary graphic code to be authenticated with recorded characteristic information; and
an authentication unit 214 for providing an authentication result.

In some implementations, the authentication service providing end 210 further comprises:
a password generating unit 215 for generating a query password immediately when the authentication result is a pass and the information to be encoded is a confidential information index, the query password having a validity period;
a password sending unit 216 for sending the query password to the requester of binary graphic code creation and confirming its receipt, and sending the query password and decoding key to the requester of binary graphic code authentication.

In order to cooperate with the authentication service providing end 210, the binary graphic code authentication system 200 further comprises a confidential information providing end 220, which is usually set on the side of the product provider Y, or is set independently but with the product provider Y having access authority. The confidential information providing end 220 comprises:
a password receiving unit 221 for receiving a query password sent from the authentication service providing X end and confirming its receipt, and receiving the product information index and query password sent by the requester of the binary graphic code authentication Z;
a password verification unit 222 for checking whether the query password from the requester of the binary graphic code authentication Z is the same as the query password from the authentication service providing end X and is within the validity period; and
a product information providing unit 223 for, if the password verification is passed, providing confidential information to the requester of the binary graphic code authentication Z according to the confidential information index.

In embodiments of the present application, the requester of binary graphic code creation Y, for example, is a product or service provider; the authentication service requester Z may be a link in the supply chain, for example, a distributor (enterprise) or an end user (individual). In the product distribution process, the product or service provider (the requester of binary graphic code creation Y) can easily provide services, such as product verification and origin tracking, for a distributor or an end user (the authentication service requester Z) through the service of creating authenticable binary graphic code and the service of authenticating binary graphic code provided by the authentication service provider X. Confidential information may be the origin, date of manufacture or manufacturer of a product, service information, etc. Any information that the product provider Y deems it necessary to encrypt and that can be obtained only after passing the aforementioned specific authentication can be used as confidential information.

As mentioned above, if necessary, confidential information can be stored by the product provider Y only, while the authentication service provider X and any other unrelated party in the circulation cannot access such information. Such an arrangement reduces the amount of information stored by the authentication service provider on the one hand, and ensures absolute security of the confidential information on the other hand.

Although the present application is illustrated and described on the basis of specific embodiments, the present application is not limited to the details given. Rather, various details about the present application may be modified within the scope of the claims and equivalent replacements of the claims.

## Claims

1. Method for creating an authenticable binary graphic code, wherein the method comprises at least the following steps:
in response to a request for creation of a binary graphic code, creating a binary graphic encoded pattern for an information to be encoded;
printing the binary graphic encoded pattern on a label or product surface ,the printing determining characteristic information about an area in which the binary graphic encoded pattern and the label or product surface overlap, wherein the binary graphic encoded pattern is used as a coordinate and a printed pattern or self-texture of the label or product surface is in a coordinate on the binary graphic encoded pattern, and the characteristic information includes a relative positional relationship between the printed pattern or the self-texture and the encoded pattern which cannot easily be copied by a counterfeiter;
extracting the characteristic information and
recording the characteristic information as all or part of a standard for authenticating the binary graphic code.

2. Product carrying an authenticable binary graphic code, comprising a product body with a printed pattern or self-texture on a label or product surface of the product body and a binary graphic encoded pattern printed on the label or product surface of the product body,
wherein at least a part of the printed pattern or self-texture overlaps with the binary graphic encoded pattern, defining an overlap area, the printed pattern or self-texture is in a coordinate on the binary graphic encoded pattern, a relative positional relationship between the printed pattern or the self-texture and the encoded pattern cannot easily be copied by a counterfeiter and is detectable as a characteristic information about the overlap area

3. Creation method as claimed in Claim 1, wherein the position where the binary graphic encoded pattern is printed on the product body is random or pseudo-random.

4. Method for authenticating a binary graphic code created by a method as claimed in Claim 1, wherein the method comprises at least the following steps: in response to a request for authentication of the binary graphic code, reading the binary graphic code to be authenticated; identifying the encoded pattern of the binary graphic code and the characteristic information about the binary graphic code to be authenticated; comparing the characteristic information about the binary graphic code to be authenticated with recorded characteristic information by judging whether the degree of matching between the two reaches a set threshold; if the set threshold is reached, the authentication is deemed to have been passed; otherwise, the authentication is deemed to have not been passed; and
providing an authentication result.

5. Authentication method as claimed in Claim 4, wherein the step of providing an authentication result further comprises: if the authentication is deemed to have been passed, allowing the binary graphic encoded pattern to be decoded and acquiring confidential information.

6. Authentication method as claimed in Claim 5, wherein the information to be encoded is confidential information or a confidential information index.

7. Authentication method as claimed in Claim 6, wherein when the information to be encoded is a confidential information index, the step of allowing the binary graphic encoded pattern to be decoded and obtaining confidential information further comprises:
generating a query password immediately, the query password having a validity period;
sending the query password to the requester (Z) of binary graphic code creation and confirming its receipt;
sending the query password and decoding key to the requester (Z) of binary graphic code authentication;
the requester (Z) of binary graphic code authentication performing decoding using the decoding key, obtaining the confidential information index, and sending the confidential information index and the received query password to the requester (Z) of binary graphic code creation;
the requester (Z) of binary graphic code creation checking whether the query password sent by the requester (Z) of binary graphic code authentication is the same as the query password received by itself and is within the validity period;
if yes, providing the requester (Z) of binary graphic code authentication with confidential information according to the confidential information index.

8. Binary graphic code creation system (100) for creating an authenticable binary graphic code, wherein the system (100) comprises:
an encoding unit (101) for, in response to a request for creation of a binary graphic code, creating a binary graphic encoded pattern for an information to be encoded;
a printing unit (102) for printing the binary graphic encoded pattern on a label or product surface,the printing determining characteristic information about an area in which the binary graphic encoded pattern and the label or product surface overlap, wherein the binary graphic encoded pattern is used as a coordinate and a printed pattern or self-texture of the label or product surface is in a coordinate on the binary graphic encoded pattern, and the characteristic information includes a relative positional relationship between the printed pattern or the self-texture and the encoded pattern which cannot easily be copied by a counterfeiter ;
an extracting unit (103) for extracting the characteristic information; and
a recording unit (104) for recording the characteristic information as all or part of a standard for authenticating the binary graphic code.

9. Binary graphic code authentication system (200), wherein
the system (200)comprises
an authentication service providing end (210) for identifying a to-be-authenticated binary graphic code created by the system (100) as claimed in Claim 8, which comprises:
a reading unit (211) for, in response to a request for authentication of a binary graphic code, reading the binary graphic code to be authenticated; an identification unit (212) for identifying the encoded pattern of and characteristic information about the binary graphic code to be authenticated;
a comparison unit (213) for comparing characteristic information about the binary graphic code to be authenticated with recorded characteristic information by judging whether the degree of matching between the two reaches a set threshold; if the set threshold is reached, the authentication is deemed to have been passed; otherwise, the authentication is deemed to have not been passed; and
an authentication unit (214) for providing an authentication result.

10. Binary graphic code authentication system (200) as claimed in Claim 9, wherein the authentication service providing end (210) further comprises:
a password generating unit (215) for generating a query password immediately when the authentication result is a pass and the information to be encoded is a confidential information index, the query password having a validity period;
a password sending unit (216) for sending the query password to the requester (Z) of binary graphic code creation and confirming its receipt, and sending the query password and decoding key to the requester (Z) of binary graphic code authentication.

11. Binary graphic code authentication system (200) as claimed in Claim 10, wherein the system (200) further comprises a confidential information providing end (220) for coordinating with the authentication service providing end (210), the confidential information providing end (220) comprising:
a password receiving unit (221) for receiving a query password sent from the authentication service providing end (210) and confirming its receipt, and receiving the product information index and query password sent by the requester (Z) of the binary graphic code authentication;
a password verification unit (222) for checking whether the query password from the requester (Z) of the binary graphic code authentication is the same as the query password from the authentication service providing end (210) and is within the validity period; and
a product information providing unit (223) for, if the password verification is passed, providing confidential information to the requester (Z) of the binary graphic code authentication according to the confidential information index.

## Patentansprüche

1. Verfahren zum Erzeugen eines authentifizierbaren binären grafischen Codes, wobei das Verfahren zumindest die folgenden Schritte umfasst:
als Reaktion auf eine Anforderung einer Erzeugung eines binären grafischen Codes Erzeugen eines binären grafischen codierten Musters für zu codierende Informationen;
Drucken des binären grafischen codierten Musters auf ein Etikett oder eine Produktoberfläche, wobei das Drucken charakteristische Informationen über einen Bereich bestimmt, in dem sich das binäre grafische codierte Muster und das Etikett oder die Produktoberfläche überlappen, wobei das binäre grafische codierte Muster als eine Koordinate verwendet wird und ein gedrucktes Muster oder eine Selbststruktur des Etiketts oder der Produktoberfläche in einer Koordinate auf dem binären grafischen codierten Muster ist und die charakteristischen Informationen eine relative Positionsbeziehung zwischen dem gedruckten Muster oder der Selbststruktur und dem codierten Muster enthalten, das nicht leicht durch einen Fälscher kopiert werden kann;
Extrahieren der charakteristischen Informationen; und
Aufzeichnen der charakteristischen Informationen als einen vollständigen oder teilweisen Standard zum Authentifizieren des binären grafischen Codes.

2. Produkt, das einen authentifizierbaren binären grafischen Code trägt und das einen Produktkörper mit einem gedruckten Muster oder einer Selbststruktur auf einem Etikett oder einer Produktoberfläche des Produktkörpers und ein binäres grafisches codiertes Muster, das auf das Etikett oder die Produktoberfläche des Produktkörpers gedruckt ist, umfasst, wobei sich zumindest ein Teil des gedruckten Musters oder der Selbststruktur mit dem binären grafischen codierten Muster überlappet, das einen Überlappungsbereich definiert, wobei das gedruckte Muster oder die Selbststruktur bei einer Koordinate auf dem binären grafischen codierten Muster befindet, wobei eine relative Positionsbeziehung zwischen dem gedruckten Muster oder der Selbststruktur und dem codierten Muster nicht leicht durch einen Fälscher kopiert werden kann und als charakteristische Informationen über den Überlappungsbereich detektierbar ist.

3. Erzeugungsverfahren nach Anspruch 1, wobei die Position, an der das binäre grafische codierte Muster auf den Produktkörper gedruckt ist, zufällig oder pseudozufällig ist.

4. Verfahren zum Authentifizieren eines binären grafischen Codes, der durch ein Verfahren nach Anspruch 1 erzeugt wird, wobei das Verfahren zumindest die folgenden Schritte umfasst:
als Reaktion auf eine Anforderung einer Authentifizierung des binären grafischen Codes Lesen des zu authentifizierenden binären grafischen Codes;
Identifizieren des codierten Musters des binären grafischen Codes und der charakteristischen Informationen über den zu authentifizierenden binären grafischen Code;
Vergleichen der charakteristischen Informationen über den zu authentifizierenden binären grafischen Code mit aufgezeichneten charakteristischen Informationen durch Beurteilen, ob der Übereinstimmungsgrad zwischen den beiden einen eingestellten Schwellenwert erreicht; wobei dann, wenn der eingestellte Schwellenwert erreicht ist, die Authentifizierung als bestanden gilt; und anderenfalls die Authentifizierung als nicht bestanden gilt; und
Liefern eines Authentifizierungsergebnisses.

5. Authentifizierungsverfahren nach Anspruch 4, wobei der Schritt des Lieferns eines Authentifizierungsergebnisses ferner Folgendes umfasst: dann, wenn die Authentifizierung als bestanden gilt, Erlauben, dass das binäre grafische codierte Muster decodiert wird und Erfassen von vertraulichen Informationen.

6. Authentifizierungsverfahren nach Anspruch 5, wobei die zu codierenden Informationen vertrauliche Informationen oder ein Index vertraulicher Informationen sind.

7. Authentifizierungsverfahren nach Anspruch 6, wobei dann, wenn die zu codierenden Informationen ein Index vertraulicher Informationen sind, der Schritt des Erlaubens, dass das binäre grafische codierte Muster decodiert wird, und des Erhaltens vertraulicher Informationen ferner Folgendes umfasst:
sofortiges Erzeugen eines Abfragepassworts, wobei das Abfragepasswort eine Gültigkeitsperiode besitzt;
Senden des Abfragepassworts an den Anforderer (Z) der Erzeugung eines binären grafischen Codes und Bestätigen seines Empfangs;
Senden des Abfragepassworts und des Decodierschlüssels an den Anforderer (Z) der Authentifizierung des binären grafischen Codes;
wobei der Anforderer (Z) der Authentifizierung des binären grafischen Codes eine Decodierung unter Verwendung des Decodierschlüssels ausführt, wodurch er den Index vertraulicher Informationen erhält, und den Index vertraulicher Informationen und das empfangene Abfragepasswort an den Anforderer (Z) der Erzeugung des binären grafischen Codes sendet;
wobei der Anforderer (Z) der Erzeugung des binären grafischen Codes überprüft, ob das durch den Anforderer (Z) der Authentifizierung des binären grafischen Codes gesendete Abfragepasswort dasselbe wie das von selbst empfangene Abfragepasswort ist und innerhalb der Gültigkeitsperiode ist;
wenn ja, Versorgen des Anforderers (Z) einer Authentifizierung des binären grafischen Codes mit vertraulichen Informationen gemäß dem Index vertraulicher Informationen.

8. System zur Erzeugung eines binären grafischen Codes (100) zum Erzeugen eines authentifizierbaren binären grafischen Codes, wobei das System (100) Folgendes umfasst:
eine Codiereinheit (101), um als Reaktion auf eine Anforderung einer Erzeugung eines binären grafischen Codes ein binäres grafisches codiertes Muster für zu codierende Informationen zu erzeugen;
eine Druckeinheit (102) zum Drucken des binären grafischen codierten Musters auf ein Etikett oder eine Produktoberfläche, wobei das Drucken charakteristische Informationen über einen Bereich bestimmt, in dem sich das binäre grafische codierte Muster und das Etikett oder die Produktoberfläche überlappen, wobei das binäre grafische codierte Muster als eine Koordinate verwendet wird und ein gedrucktes Muster oder eine Selbststruktur des Etiketts oder der Produktoberfläche in einer Koordinate auf dem binären grafischen codierten Muster ist und die charakteristischen Informationen eine relative Positionsbeziehung zwischen dem gedruckten Muster oder der Selbststruktur und dem codierten Muster enthalten, die nicht leicht durch einen Fälscher kopiert werden kann;
eine Extraktionseinheit (103) zum Extrahieren der charakteristischen Informationen; und
eine Aufzeichnungseinheit (104) zum Aufzeichnen der charakteristischen Informationen als alles oder einen Teil eines Standards zum Authentifizieren des binären grafischen Codes.

9. System zur Authentifizierung eines binären grafischen Codes (200), wobei das System (200) Folgendes umfasst:
ein Ende zum Bereitstellen eines Authentifizierungsdienstes (210) zum Identifizieren eines zu authentifizierenden binären grafischen Codes, der durch das System (100) nach Anspruch 8, erzeugt wurde, das Folgendes umfasst:
eine Leseeinheit (211), um als Reaktion auf eine Anforderung einer Authentifizierung eines binären grafischen Codes den zu authentifizierenden binären grafischen Code zu lesen;
eine Identifizierungseinheit (212) zum Identifizieren des codierten Musters von charakteristischen Informationen über den zu authentifizierenden binären grafischen Code und der Informationen;
eine Vergleichseinheit (213) zum Vergleichen von charakteristischen Informationen über den zu authentifizierenden binären grafischen Code mit aufgezeichneten charakteristischen Informationen durch Beurteilen, ob der Übereinstimmungsgrad zwischen den beiden einen eingestellten Schwellenwert erreicht; wobei dann, wenn der eingestellte Schwellenwert erreicht ist, die Authentifizierung als bestanden gilt; anderenfalls die Authentifizierung als nicht bestanden gilt; und
eine Authentifizierungseinheit (214) zum Liefern eines Authentifizierungsergebnisses.

10. System zur Authentifizierung eines binären grafischen Codes (200) nach Anspruch 9, wobei das Ende zum Bereitstellen eines Authentifizierungsdienstes (210) ferner Folgendes umfasst:
eine Passworterzeugungseinheit (215) zum sofortigen Erzeugen eines Abfragepassworts, wenn das Authentifizierungsergebnis ein Bestanden ist und die zu codierenden Informationen ein Index vertraulicher Informationen sind, wobei das Abfragepasswort eine Gültigkeitsperiode besitzt;
eine Passwortsendeeinheit (216) zum Senden des Abfragepassworts an den Anforderer (Z) einer Erzeugung eines binären grafischen Codes und Bestätigen seines Empfangs und Senden des Abfragepassworts und des Decodierschlüssels an den Anforderer (Z) der Authentifizierung des binären grafischen Codes.

11. System zur Authentifizierung eines binären grafischen Codes (200) nach Anspruch 10,
wobei das System (200) ferner ein Ende zum Bereitstellen vertraulicher Informationen (220) zum Koordinieren mit dem Ende zum Bereitstellen eines Authentifizierungsdienstes umfasst, wobei das Ende zum Bereitstellen vertraulicher Informationen (220) Folgendes umfasst:
eine Passwortempfangseinheit (221) zum Empfangen eines Abfragepassworts, das von dem Ende zum Bereitstellen eines Authentifizierungsdienstes (210) gesendet wird, und Bestätigen seines Empfangs und Empfangen des Produktinformationsindexes und des durch den Anforderer (Z) der Authentifizierung des binären grafischen Codes gesendeten Abfragepassworts;
eine Passwortüberprüfungseinheit (222) zum Überprüfen, ob das durch den Anforderer (Z) der Authentifizierung eines binären grafischen Codes gesendete Abfragepasswort dasselbe wie das Abfragepasswort von dem Ende zum Bereitstellen eines Authentifizierungsdienstes (210) ist und innerhalb der Gültigkeitsperiode ist; und
eine Produktinformationsbereitstellungseinheit (223), um dann, wenn die Passwortüberprüfung bestanden ist, vertrauliche Informationen an den Anforderer(Z) der Authentifizierung des binären grafischen Codes gemäß dem Index vertraulicher Informationen zu liefern.

## Revendications

1. Procédé de création d'un code graphique binaire authentifiable, le procédé comprenant au moins les étapes suivantes :
en réponse à une demande de création d'un code graphique binaire, la création d'un motif graphique binaire codé pour une information à coder ;
l'impression du motif graphique binaire codé sur une surface d'étiquette ou de produit, l'impression déterminant des informations caractéristiques concernant une zone dans laquelle le motif graphique binaire codé et la surface d'étiquette ou de produit se chevauchent, le motif graphique binaire codé étant utilisé comme une coordonnée et un motif imprimé ou une texture propre de la surface d'étiquette ou de produit occupant une coordonnée sur le motif graphique binaire codé, et les informations caractéristiques comportant une relation de position relative entre le motif imprimé ou la texture propre et le motif codé qui est difficilement reproductible par un faussaire ;
l'extraction des informations caractéristiques ; et
l'enregistrement des informations caractéristiques comme tout ou une partie d'une norme d'authentification du code graphique binaire.

2. Produit portant un code graphique binaire authentifiable, comprenant un corps de produit pourvu d'un motif imprimé ou d'une texture propre sur une surface d'étiquette ou de produit du corps de produit et un motif graphique binaire codé imprimé sur la surface d'étiquette ou de produit du corps de produit,
au moins une partie du motif imprimé ou de la texture propre chevauchant le motif graphique binaire codé, en définissant une zone de chevauchement, le motif imprimé ou la texture propre occupant une coordonnée sur le motif graphique binaire codé, une relation de position relative entre le motif imprimé ou la texture propre et le motif codé étant difficilement reproductible par un faussaire et étant détectable sous forme d'une information caractéristique concernant la zone de chevauchement.

3. Procédé de création selon la revendication 1, dans lequel la position d'impression du motif graphique binaire codé sur le corps de produit est aléatoire ou pseudo-aléatoire.

4. Procédé d'authentification d'un code graphique binaire créé au moyen d'un procédé selon la revendication 1, le procédé comprenant au moins les étapes suivantes :
en réponse à une demande d'authentification du code graphique binaire, la lecture du code graphique binaire à authentifier ;
l'identification du motif codé du code graphique binaire et des informations caractéristiques concernant le code graphique binaire à authentifier ;
la comparaison des informations caractéristiques concernant le code graphique binaire à authentifier à des informations caractéristiques enregistrées par évaluation si le degré de correspondance entre les deux atteint ou non un seuil défini ; si le seuil défini est atteint, l'authentification est réputée avoir réussi ; dans le cas contraire, l'authentification est réputée avoir échoué ; et
la fourniture d'un résultat d'authentification.

5. Procédé d'authentification selon la revendication 4, dans lequel l'étape de fourniture d'un résultat d'authentification comprend en outre : si l'authentification est réputée avoir réussi, l'autorisation du décodage du motif graphique binaire codé et l'acquisition d'informations confidentielles.

6. Procédé d'authentification selon la revendication 5, dans lequel les informations à décoder sont des informations confidentielles ou un index d'informations confidentielles.

7. Procédé d'authentification selon la revendication 6, dans lequel, lorsque les informations à coder sont un index d'informations confidentielles, l'étape d'autorisation du décodage du motif graphique binaire codé et d'obtention d'informations confidentielles comprend en outre :
la génération immédiate d'un mot de passe d'interrogation, le mot de passe d'interrogation possédant une période de validité ;
l'envoi du mot de passe d'interrogation au demandeur (Z) de la création du code graphique binaire et la confirmation de sa réception ;
l'envoi du mot de passe d'interrogation et d'une clé de décodage au demandeur (Z) de l'authentification du code graphique binaire ;
la réalisation, par le demandeur (Z) de l'authentification du code graphique binaire, d'un décodage à l'aide de la clé de décodage, l'obtention de l'index d'informations confidentielles et l'envoi de l'index d'informations confidentielles et du mot de passe d'interrogation reçu au demandeur (Z) de la création du code graphique binaire ;
la vérification, par le demandeur (Z) de la création du code graphique binaire, si le mot de passe d'interrogation envoyé par le demandeur (Z) de l'authentification du code graphique binaire est identique ou non au mot de passe d'interrogation reçu par lui-même et s'inscrit ou non dans la période de validité ;
dans l'affirmative, la fourniture au demandeur (Z) de l'authentification du code graphique binaire d'informations confidentielles selon l'index d'informations confidentielles.

8. Système (100) de création de code graphique binaire pour la création d'un code graphique binaire authentifiable, le système (100) comprenant :
une unité de codage (101) destinée, en réponse à une demande de création d'un code graphique binaire, à créer un motif graphique binaire codé pour une information à coder ;
une unité d'impression (102) destinée à imprimer le motif graphique binaire codé sur une surface d'étiquette ou de produit, l'impression déterminant des informations caractéristiques concernant une zone dans laquelle le motif graphique binaire codé et la surface d'étiquette ou de produit se chevauchent, le motif graphique binaire codé étant utilisé comme une coordonnée et un motif imprimé ou une texture propre de la surface d'étiquette ou de produit occupant une coordonnée sur le motif graphique binaire codé, et les informations caractéristiques comportant une relation de position relative entre le motif imprimé ou la texture propre et le motif codé qui est difficilement reproductible par un faussaire ;
une unité d'extraction (103) destinée à extraire les informations caractéristiques ; et
une unité d'enregistrement (104) destinée à enregistrer les informations caractéristiques comme tout ou une partie d'une norme d'authentification du code graphique binaire.

9. Système (200) d'authentification de code graphique binaire, le système (200) comprenant
une extrémité de fourniture de service d'authentification (210) destinée à identifier un code graphique binaire à authentifier créé par le système (100) selon la revendication 8, qui comprend :
une unité de lecture (211) destinée, en réponse à une demande d'authentification d'un code graphique binaire, à lire le code graphique binaire à authentifier ;
une unité d'identification (212) destinée à identifier le motif codé du code graphique binaire à authentifier et des informations caractéristiques le concernant ;
une unité de comparaison (213) destinée à comparer des informations caractéristiques concernant le code graphique binaire à authentifier à des informations caractéristiques enregistrées en évaluant si le degré de correspondance entre les deux atteint ou non un seuil défini ; si le seuil défini est atteint, l'authentification est réputée avoir réussi ; dans le cas contraire, l'authentification est réputée avoir échoué ; et
une unité d'authentification (214) destinée à fournir un résultat d'authentification.

10. Système (200) d'authentification de code graphique binaire selon la revendication 9, dans lequel l'extrémité de fourniture de service d'authentification (210) comprend en outre :
une unité de génération de mot de passe (215) destinée à générer immédiatement un mot de passe d'interrogation lorsque le résultat d'authentification est une réussite et les informations à décoder correspondent à un index d'informations confidentielles, le mot de passe d'interrogation possédant une période de validité ;
une unité d'envoi de mot de passe (216) destinée à envoyer le mot de passe d'interrogation au demandeur (Z) de la création du code graphique binaire et à confirmer sa réception, et à envoyer le mot de passe d'interrogation et une clé de décodage au demandeur (Z) de l'authentification du code graphique binaire.

11. Système (200) d'authentification de code graphique binaire selon la revendication 10, le système (200) comprenant en outre une extrémité de fourniture d'informations confidentielles (220) destinée à coopérer avec l'extrémité de fourniture de service d'authentification (210), l'extrémité de fourniture d'informations confidentielles (220) comprenant :
une unité de réception de mot de passe (221) destinée à recevoir un mot de passe d'interrogation envoyé depuis l'extrémité de fourniture de service d'authentification (210) et à confirmer sa réception, et à recevoir l'index d'informations de produit et le mot de passe d'interrogation envoyé par le demandeur (Z) de l'authentification du code graphique binaire ;
une unité de vérification de mot de passe (222) destinée à vérifier si le mot de passe d'interrogation provenant du demandeur (Z) de l'authentification du code graphique binaire est identique ou non au mot de passe d'interrogation provenant de l'extrémité de fourniture de service d'authentification (210) et s'inscrit ou non dans la période de validité ; et
une unité de fourniture d'informations de produit (223) destinée, si la vérification du mot de passe réussit, à fournir des informations confidentielles au demandeur (Z) de l'authentification du code graphique binaire selon l'index d'informations confidentielles.
